# EUROPÄISCHE PATENTSCHRIFT

(11) **EP 3 155 030 B1**
(45) Veröffentlichungstag und Bekanntmachung des Hinweises auf die Patenterteilung: **28.03.2018**
(21) Anmeldenummer: 15726197.5
(22) Anmeldetag: 05.06.2015
(51) Int. Cl.: C08G 18/48, C08G 18/62, C08G 18/72, C08G 18/76, C08G 18/79, C08L 25/16, C08G 101/00

(54) **POLYURETHANE MIT REDUZIERTER ALDEHYDEMISSION**
POLYURETHANES WITH REDUCED ALDEHYDE EMISSION
POLYURÉTHANES AVEC ÉMISSION RÉDUITE D'ALDÉHYDE

(30) Priorität: 13.06.2014 EP 14172395
(43) Veröffentlichungstag der Anmeldung: 19.04.2017
(73) Patentinhaber: BASF SE, 67056 Ludwigshafen am Rhein (DE)
(72) Erfinder: OTERO MARTINEZ, Iran, 32351 Stemwede (DE); NESVADBA, Peter, CH-1723 Marly (CH); ALBUERNE, Julio, 49448 Lemförde (DE)
(74) Vertreter: BASF IP Association
(86) Internationale Anmeldenummer: PCT/EP2015/062540
(87) Internationale Veröffentlichungsnummer: WO 2015/189095

(56) Entgegenhaltungen:
- EP-A1- 1 428 847
- WO-A1-2011/084865
- US-A1- 2008 281 013
- US-A1- 2013 203 880

## Beschreibung

Die vorliegende Erfindung betrifft ein Verfahren zur Herstellung von Polyurethanen bei dem man (a) Polyisocyanat, (b) polymeren Verbindungen mit gegenüber Isocyanaten reaktiven Gruppen, (c) Katalysatoren, (d) ein aus ethylenisch ungesättigten Monomeren aufgebautes Polymer P, das im Mittel mehr als 2 funktionelle Gruppen der Formel -O-NH₂ aufweist und gegebenenfalls (e) Treibmittel, (f) Kettenverlängerungs- und oder Vernetzungsmittel und (g)Hilfsmittel und/oder Zusatzstoffe zu einer Reaktionsmischung vermischt und die Reaktionsmischung zum Polyurethan ausreagieren lässt. Weiter betrifft die vorliegende Erfindung Polyurethane, die nach einem solchen Verfahren hergestellt wurden und den Einsatz solchen Polyurethane im Innenraum von Verkehrsmitteln.

Polyurethane zeichnen sich durch vielfältige Einsatzmöglichkeiten aus, beispielsweise in der Möbelindustrie als Sitzpolster oder als Bindemittel für Spanplatten, als Isoliermaterial in der Bauindustrie, als Isoliermaterial, beispielsweise von Rohren, Warmwasserspeichern oder Kühlschränken und als Verkleidungsteile, beispielsweise im Fahrzeugbau. Insbesondere im Automobilbau werden Polyurethane häufig eingesetzt, beispielsweise in der Automobilaußenverkleidung als Spoiler, Dachelemente, Federelemente sowie in der Automobilinnenverkleidung als Dachverkleidungen, Teppichhinterschäumungen, Türverkleidungen, Lenkräder, Schaltknöpfe und Sitzpolster.

Dabei ist bekannt, dass Polyurethane zu Emissionen organischer Substanzen neigen, die zu Geruchsbelästigungen oder im Fall von hohen Konzentrationen zu Unwohlsein führen können. Dabei sind insbesondere abgeschlossene Räume, beispielsweise im Innern von Gebäuden oder Fahrzeugen, beispielsweise Automobilen besonders betroffen. Ein Beispiel für solche Emissionen ist die Emission von Aldehyden. Dabei gibt es bereits unterschiedliche Ansätze zur Verringerung der Aldehydemissionen. So beschreibt Beispielsweise EP 1428847, dass Aldehydemissionen durch Zugabe von polymeren Stoffen mit primären und/oder sekundären Aminogruppen vermindert werden können, wobei aber insbesondere die Emission von Acetaldehyden weiter verbesserungswürdig ist.

JP 2005-154599 beschreibt die Reduktion von Aldehydemissionen in Polyurethanschaumstoffen durch Zugabe von 0,001 bis 0,01 Gew.-% eines Reduktionsmittels, ausgewählt aus Natriumborhydrid, Aluminiumlithiumhydrid, Natriumthiosulfat, Natriumsulfit, Hydrazinverbindungen, Ascorbinsäure und reduzierendem Zucker. Dabei ist die Aldehydemission in Schaumstoffen nach JP 2005-154599 immer noch verbesserungswürdig.

US 2008/0281013 beschreibt den Einsatz von Sulfiten und/oder Disulfiten im Bereich von 0,02 bis 2 Gew.-% zur Reduzierung von Aldehydemissionen.

Auch bei Einsatz von reduzierenden Substanzen ist die Verringerung der Acetaldehydemissionen verbesserungswürdig.

Aufgabe der vorliegenden Erfindung war es, ein weiteres, verbessertes Verfahren zur Reduzierung von Aldehydemissionen, insbesondere von Acetaldehyd, in Polyurethanen, vorzugsweise Polyurethanschaumstoffen, zu liefern. Insbesondere sollen dabei Stoffe zum Einsatz kommen, die die Herstellung der Polyurethane nicht beeinträchtigen.

Überraschenderweise konnte die erfindungsgemäße Aufgabe gelöst werden durch ein Verfahren zur Herstellung von Polyurethanen bei dem man (a) Polyisocyanat, (b) polymeren Verbindungen mit gegenüber Isocyanaten reaktiven Gruppen, (c) Katalysatoren, (d) aus ethylenisch ungesättigten Monomeren aufgebautes Polymer P, das im Mittel mehr als 2 funktionelle Gruppen der Formel -O-NH₂ aufweist und gegebenenfalls (e) Treibmittel, (f) Kettenverlängerungs- und oder Vernetzungsmittel und (g)Hilfsmittel und/oder Zusatzstoffe zu einer Reaktionsmischung vermischt und die Reaktionsmischung zum Polyurethan ausreagieren lässt.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen insbesondere massive Polyisocyanat-Polyadditionsprodukte, wie Duromere, und Schaumstoffe auf Basis von Polyisocyanat-Polyadditionsprodukten, wie Weichschaumstoffe, Halbhartschaumstoffe, Hartschaumstoffe oder Integralschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Vorzugsweise sind die erfindungsgemäßen Polyurethane Polyurethanschaumstoffe oder massive Polyurethane, die, abgesehen von den im Folgenden erläuterten Polyurethanbausteinen (a) bis (g) keine weiteren Polymere enthalten.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders bevorzugt größer gleich 150 kPa auf. Weiterhin verfügt der Polyurethan-Hartschaumstoff nach DIN ISO 4590 über eine Geschlossenzelligkeit von größer 80%, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich um einen Polyurethan-Hartschaumstoff, einen PolyurethanHalbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Dabei werden erfindungsgemäße Polyurethane erhalten indem man Polyisocyanate (a) mit polymeren Verbindungen mit gegenüber Isocyanaten reaktiven Gruppen (b), gegebenenfalls Katalysatoren (c), aus ethylenisch ungesättigten Monomeren aufgebautes Polymer P, das im Mittel mehr als 2 funktionelle Gruppen der Formel -O-NH₂ aufweist (d) und gegebenenfalls Treibmittel (e), Kettenverlängerer (f) und sonstigen Hilfs- und Zusatzstoffen (g) zu einer Reaktionsmischung vermischt und ausreagieren lässt.

Dabei ist das erfindungsgemäße Polyurethan in einer bevorzugten Ausführungsform ein Polyurethanschaumstoff mit einer mittleren Dichte von 20 bis 850 g/L, vorzugsweise ein Polyurethanhalbhartschaumstoff oder ein Polyurethanweichschaumstoff oder ein Polyurethanhartschaumstoff, besonders bevorzugt ein elastomerer Polyurethanweichschaumstoff ein Polyurethanhalbhartschaumstoff oder ein elastomerer Polyurethanintegralschaumstoff. Der elastomere Polyurethanintegralschaumstoff weist vorzugsweise eine über den Kern und die Randzone gemittelte Dichte von 150 bis 500 g/L auf. Der Polyurethanweichschaumstoff weist vorzugsweise eine mittlere Dichte von 10 bis 100 g/L auf. Der Polyurethanhalbhartschaumstoff weist vorzugsweise eine mittlere Dichte von 70 bis 150 g/L auf.

In einer weiteren bevorzugten Ausführungsform ist das Polyurethan ein massives Polyurethan mit einer Dichte von vorzugsweise mehr als 850 g/L, vorzugsweise 900 bis 1400 g/L und besonders bevorzugt 1000 bis 1300 g/L. Dabei wird ein massives Polyurethan im Wesentlichen ohne Zugabe eines Treibmittels erhalten. Geringe Mengen an Treibmittel, beispielsweise Wasser, das herstellungsbedingt in den Polyolen enthalten ist, gilt dabei nicht als Treibmittel. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser.

Dabei wird das erfindungsgemäße Polyurethan vorzugsweise im Innenraum von Transportmitteln, wie Schiffen, Flugzeugen, LKW's, PKW's oder Bussen, besonders bevorzugt PKW's oder Bussen und insbesondere PKW's eingesetzt. Dabei wird der Innenraum von PKW's und Bussen im Folgenden als Automobilinnenraumteil bezeichnet. Ein Polyurethanweichschaumstoff kann dabei als Sitzpolster eingesetzt werden, ein Polyurethanhalbhartschaumstoff als Hinterschäumung von Tür-Seitenelementen oder Instrumententafeln, ein Polyurethanintegralschaumstoff als Lenkrad, Schaltknopf oder Kopfstütze und ein massives Polyurethan beispielsweise als Kabelummantelung.

Die zur Herstellung der erfindungsgemäßen Polyurethane verwendeten Polyisocyanatkomponenten (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiisocyanats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polymeren Verbindungen mit gegenüber Isocyanaten reaktiven Gruppen (b) (Bestandteil (a-2)) und/oder Kettenverlängerern (c) (Bestandteil (a-3)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden.

Als polymere Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 400 bis 15000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279.

In einer besonders bevorzugten Ausführungsform der vorliegenden Erfindung enthält die Komponente (b) Polyetherole und weiter bevorzugt keine Polyesterole. Vorzugsweise werden Polymere P nicht als polymere Verbindungen mit mindestens zwei gegenüber Isocyanaten reaktiven Wasserstoffatomen angesehen, auch wenn diese funktionelle Gruppen der Formeln -O-NH₂ tragen.

Katalysatoren c) beschleunigen die Reaktion der Polyole (b) und gegebenenfalls Kettenverlängerungs- und Vernetzungsmittel (f) sowie chemischem Treibmittel (e) mit den organischen, gegebenenfalls modifizierten Polyisocyanaten (a) stark. Dabei enthalten die Katalysatoren (c) einbaubare Aminkatalysatoren. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen, Hydroxylgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere tertiäte Aminogruppen aufweisen. Vorzugsweise trägt mindestens eine der tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- und Ethylrest sowie einen weiteren organischen Rest. Beispiele für einsetzbare einbaubare Katalysatoren sind beispielsweise Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 aminopropyl)-bis(aminoethylether), 3-Dimethylaminoisopropyl-diisopropanolamin oder Mischungen davon..

Neben den einbaubaren Aminkatalysatoren können weiter übliche Katalysatoren zur Herstellung der Polyurethane eingesetzt werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt. In einer besonders bevorzugten Ausführungsform werden ausschließlich einbaubare Katalysatoren als Katalysatoren (c) eingesetzt.

Werden Katalysatoren (c) eingesetzt, können diese beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Weiter werden (d) Polymere P, die Homopolymere oder Copolymere sein können, eingesetzt, wobei die Polymere P im Mittel mehr als 2 funktionelle Gruppen der Formel -O-NH₂ aufweisen. Polymere P sind aus ethylenisch ungesättigten Monomeren aufgebaut. Dementsprechend weisen sie ein aus Kohlenstoffatomen aufgebautes Polymerrückgrat auf, im Folgenden auch als Kohlenstoffrückgrat bezeichnet. Die funktionellen Gruppen der Formel -O-NH₂ können direkt oder über einen Linker A an das Kohlenstoffrückgrat gebunden sein. Hierbei steht A vorzugsweise für einen bivalenten Rest der Formel X-[O-Alk]ₙ, worin
- X: eine chemische Bindung bedeutet oder für einen bivalenten Rest steht, der an ein Kohlenstoffatom des Polymerrückgrats gebunden ist und der ausgewählt ist unter Phenylen, Phenylen-CH₂-, C(O), CH₂, O-C₂-C₁₂-Alkandiyl und
C(O)-NR^{c}-(C₂-C₁₀-Alkandiyl), wobei R^{c} für Wasserstoff, C₁-C₄-Alkyl oder -(C₂-C₁₂-Alkandiyl)-O-NR¹R² steht, wobei R^{c} insbesondere Wasserstoff bedeutet;
- n: für eine Zahl von 0 bis 20 steht, wobei n von 0 verschieden ist, wenn X für C(O) steht und wobei n insbesondere 0 ist;
- Alk: für C₂-C₄-Alkandiyl und insbesondere für CH₂CH₂ (= Ethan-1,2-diyl) steht.

Vorzugsweise ist n von 0 verschieden, wenn X für eine chemische Bindung steht.

In einer ersten Ausführungsform steht X für eine chemische Bindung oder CH₂ und n steht für eine ganze Zahl von 1 bis 20, insbesondere 1 bis 10, wobei n auch 0 sein kann, wenn X für CH₂ steht.

In einer zweiten Ausführungsform steht X für Phenylen und n steht für 0 oder eine ganze Zahl von 1 bis 20, insbesondere 1 bis 10 und insbesondere für 0.

In einer dritten Ausführungsform steht X für Phenylen-CH₂- und n steht für 0 oder eine ganze Zahl von 1 bis 20, insbesondere 1 bis 10 und insbesondere für 0.

In einer vierten Ausführungsform steht X für C(O) und n steht für eine ganze Zahl von 1 bis 20, insbesondere 1 bis 10 und insbesondere für 1.

In einer fünften Ausführungsform steht X für C(O)-NR^{c}-(C₂-C₁₀-Alkandiyl), wobei R^{c} die zuvor genannten Bedeutungen aufweist und insbesondere Wasserstoff bedeutet, und n steht für 0 oder eine ganze Zahl von 1 bis 20, insbesondere 1 bis 10 und insbesondere für 0.

In einer sechsten Ausführungsform steht X für C₂-C₁₂-Alkandiyl oder O-C₂-C₁₂-Alkandiyl und n steht für 0 oder 1.

In einer speziellen Ausführungsform steht X für Phenylen-CH₂- und n steht für 0.

Der Gehalt an funktionellen Gruppen der Formel -O-NH₂ kann über weite Bereiche variiert werden. In der Regel weisen die Polymere P im Mittel (Zahlenmittel) mehr als 2, vorzugsweise wenigstens 2,5 und insbesondere wenigstens 3 Gruppen der Formel -O-NR¹R² auf. Die Obergrenze der Anzahl der funktionellen Gruppen der Formel -O-NH₂ ist lediglich durch das Molekulargewicht der Polymere P begrenzt und kann beispielsweise bis zu 1000 oder mehr betragen. Bevorzugt weisen die Polymere P 0,05 bis 6 mol/kg insbesondere 0,1 bis 3 mol/kg funktionelle Gruppen der Formel -O-NR¹R² auf.

Das zahlenmittlere Molekulargewicht Mₙ der Polymere wird in der Regel wenigstens 500 g/mol, insbesondere wenigstens 5.000 g/mol und speziell wenigstens 10.000 g/mol betragen. Häufig wird das zahlenmittlere Molekulargewicht 10⁶ g/mol, insbesondere 5 x 10⁵ g/mol und speziell 2 x 10⁵ g/mol nicht überschreiten. Das gewichtsmittlere Molekulargewicht M_{w} der Polymere P liegt typischerweise im Bereich von 550 bis 5 x 10⁶ g/mol, häufig im Bereich von 10.000 bis 2 x10⁶ g/mol und insbesondere im Bereich von 20.000 bis 10⁶ g/mol. Das Verhältnis von Gewichtsmittlerem Molekulargewicht zu zahlenmittlerem Molekulargewicht M_{w}/Mₙ liegt typischerweise m Bereich von 1,1 bis 10 und insbesondere im Bereich von 1,2 bis 5.

Die hier angegebenen Werte des Molekulargewichts entsprechen den Werten, wie man sie durch Größenausschlusschromatographie unter Verwendung von definierten Polystyrol-Standards ermitteln kann. Wegen Details wird auf die Angaben zu den Beispielen verwiesen.

Die Polymere P weisen sie im Mittel mehr als 2 Wiederholungseinheiten M_{A} auf, die von einem monoethylenisch ungesättigten Monomer A abgeleitet sind, das eine funktionelle Gruppen der Formel -O-NR¹R² trägt.

Vorzugsweise weist das monoethylenisch ungesättigte Monomer A die Formel I auf: 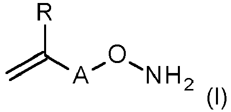 worin
- R: für Wasserstoff oder Methyl steht, und
- A: für eine Gruppe der Formel X-[O-Alk]ₙ steht, worin X, Alk und n die zuvor genannten Bedeutungen und insbesondere die als bevorzugt oder in Zusammenhang mit den Ausführungsformen 1 bis 6 genannten Bedeutungen aufweisen.

Besonders bevorzugt sind Monomere A Monomere der Formel I, worin X für Phenylen-CH₂-steht und n für 0 oder eine ganze Zahl von 1 bis 20, insbesondere 1 bis 10 steht und n insbesondere für 0 steht. Alk steht, sofern vorhanden, insbesondere für Ethan-1,2-diyl. In speziellen Ausführungsformen sind die Monomere A ausgewählt unter den Monomeren der Formel I, worin R für Wasserstoff steht und A für Phenylen-CH₂ steht.

Unter den Polymeren P sind Copolymere bevorzugt, d. h. Polymere, die neben den Wiederholungseinheiten M_{A} ein oder mehrere weitere Wiederholungseinheiten M_{B} aufweisen, die von monoethylenisch ungesättigten Monomeren B abgeleitet sind, welche keine funktionelle Gruppe der Formel -O-NH₂ aufweisen. Ebenfalls bevorzugt sind Polymere, die neben den Wiederholungseinheiten M_{A} Wiederholungseinheiten M_{B'}, die von Vinylalkohol abgeleitet sind, und gegebenenfalls Wiederholungseinheiten M_{B} aufweisen. Grundsätzlich sind alle Monomere B als Comonomere geeignet, die eine ethylenisch ungesättigte Gruppe aufweisen. Die Monomere B können neutral, basisch, sauer, nichtionisch, anionisch oder kationisch sein.

In den bevorzugten Polymeren P liegt das Molverhältnis von Wiederholungseinheiten M_{A} zu Wiederholungseinheiten M_{B} in der Regel im Bereich von 1 : 100 bis 10 : 1, insbesondere im Bereich von 1 : 80 bis 2 : 1 und speziell im Bereich von 1 : 75 bis 1 : 1.

In den Polymeren P wird der Anteil der Wiederholungseinheiten M_{A}, bezogen auf das Gesamtgewicht der das Polymer P konstituierenden Wiederholungseinheiten, in der Regel wenigstens 5 Gew.-%, vorzugsweise wenigstens 10 Gew.-% und insbesondere wenigstens 15 Gew.-% sein. Dementsprechend liegt der Anteil der Wiederholungseinheiten M_{A} in den Polymeren P in der Regel im Bereich von 10 bis 100 Gew.-% oder 5 bis 90 Gew.-%, insbesondere im Bereich von 10 bis 100 Gew.-% oder im Bereich von 10 bis 80 Gew.-%, speziell im Bereich von 15 bis 100 Gew.-% oder im Bereich von 15 bis 50 Gew.-%, jeweils bezogen auf die Gesamtmenge der das Polymer P1 konstituierenden Wiederholungseinheiten. Der Anteil der Wiederholungseinheiten M_{B} bzw. M_{B'} liegt, sofern vorhanden, in der Regel im Bereich von 10 bis 95 Gew.-%, insbesondere im Bereich von 20 bis 90 Gew.-% oder im Bereich von 50 bis 85 Gew.-%, jeweils bezogen auf die Gesamtmenge der das Polymer P1 konstituierenden Wiederholungseinheiten.

In bevorzugten Ausführungsformen umfassen die Wiederholungseinheiten MB bzw. MB' der Polymere P ein oder mehrere Wiederholungseinheiten, die von Monomeren B1, die eine Wasserlöslichkeit von wenigstens 50 g/l, insbesondere wenigstens 100 g/l bei 20°C und 1 bar, aufweisen, oder von Vinylalkohol abgeleitet sind.

Beispiele für Monomere B1 sind die folgenden Monomerklassen B1-a bis B1-j:
- B1-a:: monoethylenisch ungesättigte C₃-C₈-Monocarbonsäuren, wie Acrylsäure, Methacryl-säure, Crotonsäure oder Vinylessigsäure, und deren Salze, insbesondere deren Alkalimetallsalze und Ammoniumsalze;
- B1-b:: monoethylenisch ungesättigte C₄-C₈-Dicarbonsäuren, wie Fumarsäure, Itaconsäure, Citraconsäure oder maleinsäure, und deren Salze, insbesondere deren Alkalimetallsalze und Ammoniumsalze;
- B1-c:: monoethylenisch ungesättigte Sulfonsäuren, wie Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropansulfonsäure, Styrolsulfonsäure und deren Derivate, wie etwa Styrol-4-sulfonsäure und Styrol-3-sulfonsäure, sowie die Salze, insbesondere die Erdalkali- oder Alkalimetallsalze der vorgenannten Säuren, wie etwa Natrium-styrol-3-sulfonat und Natriumstyrol-4-sulfonat;
- B1-d:: monoethylenisch ungesättigte Phosphonsäuren und Phosphorsäuren, wie Vinylphosphonsäure, Allylphosphonsäure, Phosphonoethylacrylat, Phosphonoethylmethacrylat, Phosphonopropylacrylat, Phosphonopropylmethacrylat, und 2-Acrylamido-2-methylpropanphosphosäure, sowie die Salze, insbesondere die Erdalkali- oder Alkalimetallsalze der vorgenannten Säuren;
- B1-e:: Amide monoethylenisch ungesättigter C₃-C₈-Monocarbonsäuren, wie Acrylamid oder Methacrylamid;
- B1-f:: Hydroxy-C₂-C₄-alkylester monoethylenisch ungesättigter C₃-C₈-Monocarbonsäuren, insbesondere die Hydroxy-C₂-C₄-alkylester der Acrylsäure und der Methacrylsäure wie 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat,
3-Hydroxybutylacrylat, 3-Hydroxybutylmethacrylat, 4-Hydroxybutylacrylat oder 4-Hydroxybutylmethacrylat;
- B1-g:: Poly-C₂-C₄-alkylenoxid-Ester monoethylenisch ungesättigter C₃-C₈-Monocarbonsäuren, insbesondere die Ester der Acrylsäure oder der Methacrylsäure, beispielsweise Monomere der folgenden Formel A' 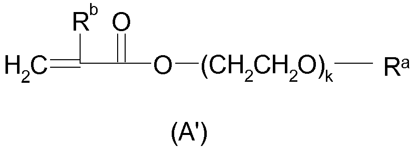 worin
k für eine ganze Zahl von 4 bis 40 steht, Ra für Wasserstoff oder C₁-C₄-Alkyl steht und R^{b} Wasserstoff oder Methyl bedeutet.
- B1-h:: Di-C₁-C₄-alkylamino-C₂-C₄-alkylester monoethylenisch ungesättigter C₃-C₈-Monocarbonsäuren, insbesondere die Dimethylamino-C₂-C₄-alkylester und die die Diethylamino-C₂-C₄-alkylester, speziell der Acrylsäure oder der Methacrylsäure wie 2-(Dimethylamino)ethylacrylat, 2-(Diethylamino)ethylmethacrylat, 2-(Dimethylamino)propylacrylat, 2-(Diethylamino)propylmethacrylat, 3-(Dimethylamino)propylacrylat, 3-(Diethylamino)propylmethacrylat und deren Säureadditionssalze, insbesondere deren Hydrochloride, Hydrobromide und Hydrosulfate;
- B1-i:: N-Vinyllactame wie N-vinylpyrrolidon oder N-Vinylcaprolactam
- B1-j:: Olefinisch ungesättigte Nitrile wie Acrylnitril oder Methacrylnitril.

Unter den Monomeren B1-a bis B1-h sind die Monomere B1-a, B1-c, B1-d, B1-e, B1-f und B1-g und speziell die Monomere B1-a, B1-e und B1-f bevorzugt.

Neben oder anstelle der vorgenannten Wiederholungseinheiten, die von den Monomeren B1 oder Vinylalkohol abgeleitet sind, können die Wiederholungseinheiten M_{B} auch solche Wiederholungseinheiten umfassen, die von Monomeren B2 abgeleitet sind, die in Wasser nur eine geringe Löslichkeit aufweisen, die bei 20°C typischerweise 40 g/L und insbesondere 30 g/L nicht überschreitet.

### Hierzu zählen:

- B2-a:: Ester und Diester monoethylenisch ungesättigter C₃-C₈-Mono- und C₄-C₈-Dicarbonsäuren mit C₁-C₃₀-Alkanolen, insbesondere mit C₁-C₁₀-Alkanolen,
- B2-b:: Ester von Vinyl- oder Allylalkohol mit C₁-C₃₀-Monocarbonsäuren,
- B2-c:: Vinylaromaten,
- B2-d:: Amide monoethylenisch ungesättigter C₃-C₈-Monocarbonsäuren mit C₁-C₃₀-Alkylaminen oder Di-C₁-C₃₀-alkylaminen, insbesondere mit C₁-C₁₀-Alkylaminen oder DiC₁-C₁₀-alkylaminen, und Mischungen davon;
- B2-e:: Vinylhalogenide und Chloropren;
- B2-f:: Olefine und konjugierte Diolefine.

Vorzugsweise ist B2 ausgewählt unter den Monomeren B2-a, B2-b und B2-c, insbesondere unter den Estern monoethylenisch ungesättigter C₃-C₈-Monocarbonsäuren, insbesondere den Estern der Acrylsäure (Acrylate) und den Estern der Methacrylsäure (Methacrylate), mit C₁-C₁₀-Alkanolen und Vinylaromaten, besonders bevorzugt unter C₁-C₁₀-Alkylacrylaten und C₁-C₁₀-Alkylmethacrylaten und Vinylaromaten, und speziell unter Methylacrylat, Ethylacrylat, n-Proplyacrylat, Isopropylacrylat, n-Butylacrylat, tert.-Butylacrylat, 2-Butylacrylat, Isobutylacrylat, 2-Ethylhexylacrylat, Methylmethacrylat, n-Butylmethacrylat, tert.-Butylmethacrylat und Styrol.

Vorzugsweise umfassen die Monomere B wenigstens ein Monomer B1 oder eine Kombination wenigstens eines Monomers B1 mit wenigstens einem Monomer B2. Vorzugsweise macht der molare Anteil der Monomere B1, bezogen auf die Gesamtzahl der Monomere B, wenigstens 10 mol-% und insbesondere wenigstens 20 mol-% aus und liegt insbesondere im Bereich von 10 bis 100 mol-% und speziell im Bereich von 20 bis 100 mol-%, bezogen auf die Gesamtmenge der Monomere B. Dementsprechend wird in dieser Ausführungsform der Anteil der Monomere B2 80 mol-% und insbesondere 90 mol-%, bezogen auf die Gesamtmenge der Monomere B nicht überschreiten.

Unter den Polymeren P sind solche Polymere bevorzugt, die in Wasser löslich oder zumindest dispergierbar sind. Insbesondere sind unter den Polymeren P solche Polymere bevorzugt, die in Wasser zumindest bei pH > 10 und 20°C löslich sind und speziell solche, die auch bereits bei pH 8 und 20°C oder pH < 8 und 20°C löslich sind. Derartige Polymere P enthalten in der Regel wenigstens 10 Gew.-%, insbesondere wenigstens 20 Gew.-% und speziell wenigstens 30 Gew.-%, bezogen auf die Gesamtmenge der das Polymer P konstituierenden Monomere A und B, wenigstens ein Monomers B1 einpolymerisiert, das insbesondere unter den Monomeren B1-a, B1-c, B1-d, B1-e, B1-f und B1g ausgewählt ist.

Insbesondere sind Polymere P bevorzugt, die
- 5 bis 90 Gew.-%, insbesondere 10 bis 80 Gew.-% und speziell 15 bis 50 Gew.-% wenigstens eines Monomers A, insbesondere eines Monomers der Formel I und speziell eines Monomers vom Typ 3; und
- 10 bis 95 Gew.-%, insbesondere 20 bis 90 Gew.-% und speziell 30 bis 85 Gew.-% wenigstens eines Monomers B1, das insbesondere unter den Monomeren B1-a, B1-c, B1-d, B1-e, B1-f und B1g ausgewählt ist;
- 0 bis 85 Gew.-%, oder 5 bis 85 Gew.-%, insbesondere 0 bis 70 Gew.-% oder 5 bis 70 Gew.-% und speziell 0 bis 55 Gew.-% oder 5 bis 55 Gew.-% eines oder mehrerer Monomere B2, das insbesondere unter den Monomeren B2-a und
   B2-c ausgewählt ist;
einpolymerisiert enthalten, wobei alle Angaben in Gew.-% auf die Gesamtmenge der das Polymer P konstituierenden Monomere A und B bezogen sind.

Ebenfalls sind Polymere P bevorzugt, die
- 5 bis 90 Gew.-%, insbesondere 10 bis 80 Gew.-% und speziell 15 bis 50 Gew.-% wenigstens eines Monomers A, insbesondere eines Monomers der Formel I und speziell eines Monomers vom Typ 1;
- 10 bis 95 Gew.-%, insbesondere 20 bis 90 Gew.-% und speziell 30 bis 85 Gew.-% Wiederholungseinheiten, die von Vinylalkohol abgeleitet sind;
- 0 bis 85 Gew.-%, oder 5 bis 85 Gew.-%, insbesondere 0 bis 70 Gew.-% oder 5 bis 70 Gew.-% und speziell 0 bis 55 Gew.-% oder 5 bis 55 Gew.-% eines oder mehrerer Monomere B1, das insbesondere unter den Monomeren B1-a, B1-c, B1-d, B1-e, B1-f und B1g ausgewählt ist;
- 0 bis 85 Gew.-%, oder 5 bis 85 Gew.-%, insbesondere 0 bis 70 Gew.-% oder 5 bis 70 Gew.-% und speziell 0 bis 55 Gew.-% oder 5 bis 55 Gew.-% eines oder mehrerer Monomere B2, das insbesondere unter den Monomeren B2-a und
   B2-b ausgewählt ist;
einpolymerisiert enthalten, wobei alle angaben in Gew.-% auf die Gesamtmenge der das Polymer P konstituierenden Monomere A und B bezogen sind.

Die Polymere P sind in der Regel unvernetzt, d. h. sie enthalten im Wesentlichen keine Monomere einpolymerisiert, die zwei oder mehrere, nicht konjugierte Doppelbindungen aufweisen. Insbesondere liegt der Anteil an Monomeren, die zwei oder mehrere, nicht konjugierte Doppelbindungen aufweisen, bei weniger als 0,1 Gew.-%, insbesondere weniger als 0,05 Gew.-% oder weniger als 0,01 Gew.-%, bezogen auf die Gesamtmenge der das Polymer P konstituierenden Monomere A und B.

Die Herstellung der Polymere P kann in Analogie zu bekannten Verfahren der Polymersynthese erfolgen, wie readikalische oder ionische Polymerisationstechniken. Beispielsweise ist die Herstellung der Polymere P in EP 14163568.0 beschrieben.

Die Komponente (d) wird im Rahmen der vorliegenden Erfindung vorzugsweise in Mengen von 0,01 bis 2 Gew.-%, besonders bevorzugt 0,02 bis 1 Gew.-% und insbesondere 0,05 bis 0,2 Gew.-%, bezogen auf das Gesamtgewicht der Komponenten (a) bis (f) eingesetzt. Dabei wird die Komponente (d) besonders bevorzugt in Form einer wässrigen Lösung, besonders bevorzugt mit einer Konzentration von 50 bis 300 g/L, vorzugsweise 100 bis 200 g/L eingesetzt. In diesem Fall ist das Lösungsmittel Wasser gleichzeitig Treibmittel (e).

Wenn das erfindungsgemäße Polyurethan als Polyurethan-Schaumstoff vorliegen soll, enthalten erfindungsgemäße Reaktionsmischungen noch Treibmittel (e). Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser eingesetzt.

Als Kettenverlängerer und Vernetzungsmittel (f) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Werden Kettenverlängerungsmittel und/oder Vernetzungsmittel (f) eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Glycerin, Trimethylolpropan, Glycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Weiter können Hilfsmittel und/oder Zusatzstoffe (g) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Im Allgemeinen werden bei der Herstellung des erfindungsgemäßen Polyurethans die Polyisocyanate (a), die Polyole (b), aus ethylenisch ungesättigten Monomeren aufgebautes Polymer P, das im Mittel mehr als 2 funktionelle Gruppen der Formel -O-NH₂ aufweist (d), und, falls eingesetzt die Treibmittel (e) und Kettenverlängerungsmittel und/oder Vernetzungsmittel (f) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c), (d) und gegebenenfalls (e) und (f) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (d) und gegebenenfalls (e) und (f) von 1,5 bis 20:1, vorzugsweise 1,5 bis 8:1 verwendet. Ein Verhältnis von 1:1 entspricht dabei einem Isocyanatindex von 100.

Die speziellen Ausgangssubstanzen (a) bis (g) für die Herstellung von erfindungsgemäßen Polyurethanen unterscheiden sich jeweils quantitativ und qualitativ nur geringfügig wenn als erfindungsgemäßes Polyurethan ein thermoplastisches Polyurethan, ein Weichschaumstoff, ein Halbhartschaumstoff, ein Hartschaumstoff oder ein Integralschaumstoff hergestellt werden soll. So werden beispielsweise für die Herstellung von massiven Polyurethanen keine Treibmittel eingesetzt sowie für thermoplastisches Polyurethan überwiegend streng difunktionelle Ausgangssubstanzen eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines massiven Polyurethans werden beispielsweise in EP 0989146 oder EP 1460094, die Edukte für die Herstellung eines Weichschaums in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die Edukte für Herstellung eines Integralschaumstoffs in EP 364854, US 5506275 oder EP 897402 beschrieben. Zu den in diesen Dokumenten beschriebenen Edukten wird dann jeweils noch das aus ethylenisch ungesättigten Monomeren aufgebautes Polymer P, das im Mittel mehr als 2 funktionelle Gruppen der Formel -O-NH₂ aufweist (d) zugegeben.

Neben dem erfindungsgemäßen Verfahren ist auch ein Polyurethan, erhältlich nach einem erfindungsgemäßen Verfahren Gegenstand der Erfindung. Die erfindungsgemäßen Polyurethane werden vorzugsweise in geschlossenen Räumen eingesetzt, beispielsweise als thermische Isoliermaterialien in Wohngebäuden, wie Isolierungen für Rohre und Kühlschränke, im Möbelbau, beispielsweise als Dekorelemente oder als Sitzpolster sowie im Automobilinnenraum, beispielsweise als Lenkräder, Armaturenbretter, Türverkleidungen, Teppichhinterschäumungen, akustische Schaumstoffe, wie Dachhimmel, sowie Kopfstützen oder Schaltknäufe.

Die Erfindung soll im Folgenden anhand von Beispielen verdeutlicht werden.

### Ausgangsmaterialien für die Herstellung des Polymers P:

4-Aminoxymethylstyrol: Monomer der Formel I, worin R1, R2 und R für H stehen und A 4-Phenylen-CH₂ bedeutet, hergestellt nach der Vorschrift von Wen-Jing Zhou, Mark E. Wilson, Mark J. Kurth, You-Lo Hsieh, John M. Krochta, Charles F. Shoemaker Macromolecules 1997, 30, 7063 -7068.

### Herstellung des Polymers P:

Copolymer aus Methacrylsäure-Natriumsalz und 4-Aminoxymethylstyrol
Eine Lösung von 6.89 g, (0.08 mol) Methacrylsäure in 50 ml Wasser wurde mit 6.72 g (0.08 mol) festem Natriumhydrogencarbonat neutralisiert. Zu der so erzeugten Lösung des Natriummethacrylats wurden nacheinander zugegeben 50 ml Ethanol, 5.97 g (0.04 mol) 4-Aminoxymethylstyrol und 0.99 g (0.006 mol) Azoisobutyronitril. Die Lösung wurde anschliessend durch 3 Vakuum/Argon Zyklen vom Sauerstoff befreit und anschliessend 16 Stunden bei 75 °C unter Argon gerührt. Die leicht visköse Lösung wurde dann eingedampft, zuletzt bei 90 °C und 1 mbar. Es wurden 15.21 g des Copolymers P als leicht beiges, sprödes Harz erhalten.

Das Polymer wurde durch Dialyse von den Spuren des nicht umgesetzten Na-Methacrylats gereinigt. Die GPC Analyse des Copolymers zeigte folgende Molekulargewichtsmittel:
Mn = 15 340 g/mol und Mw=123 500 g/mol

Die Molekulargewichtsanalyse des Polymers P erfolgte mittels Größenausschlusschromatographie (GPC). Die Probe wurde vor der Injektion über Macherey-Nagel PTFE.20/25 (0,2 µm) filtriert und über einer Trennsäulen-Kombination (PI-Gel Vorsäule (PI Gel 5µm, ID: 7,5 mm, L: 5 cm), PLgel MIXED B (PL gel 10 µm, ID: 7,5 mm, L: 30 cm)) aufgetrennt. Detektiert wurde mittels eine DRI HP 1100. Die Kalibrierung erfolgte mit eng verteilten Polystyrol-Standards der Fa. Polymer Laboratories mit Molekulargewichten von M = 580 bis M = 6.870.000, sowie Hexylbenzol (M = 162). Die Werte außerhalb dieses Elutionsbereiches wurden extrapoliert.

Einsatzstoffe zur Polyurethanherstellung
- Polyol A:: Polyetherol mit einer OH-Zahl 28 mg KOH/g und einer Funktionalität von 2.7 auf Basis von Ethylenoxyd und Propylenoxid, einem Propylenoxidgehalt von 84 Gew.-% und einem Ethylenoxidgehalt von 14 Gew.-%
- Polyol B:: Polyetherol mit einer OH-Zahl 250 mg KOH/g und einer Funktionalität von 2.0 auf Basis von Polyol A (35%), Propylenoxid (45%) und Dimethylaminopropylamin (20%)
- TEOA:: Triethanolamine
- Isopur SU-12021:: Schwarzpaste der Firma ISL-Chemie
- Jeffcat ZF10:: Katalysator der Firma Huntsman
- Jeffcat DPA:: Katalysator der Firma Huntsman

### Additive:

- V1:: 12%igen wässrige Polyvinylaminlösung
- V2:: Natriumsulfit
- V3:: 2-Mercaptobenzoxazol
- A1:: Polymer P gemäß Beispiel

Isocyanat: Mischung von 85 Teile Carbodiimid-modifiziertes 4,4'-MDI und 15 Teil polymeres Diphenylmethandiisocyanat PMDI mit einem NCO-Gehalt von 27.1

Die Mischung A wurde durch Vermischen von folgenden Komponenten hergestellt:

**Additiv V1 bis V3 bzw. A1 gemäß Tabelle 1**

| | |
|---|---|
| 92.4 | Gew.-Teile Polyol A |
| 3.0 | Gew.-Teile Polyol B |
| 1.5 | Gew.-Teile TEOA |
| 0.5 | Gew.-Teile Isopur SA-21050 |
| 1.9 | Gew.-Teile Wasser |
| 0.4 | Gew.-Teile Jeffcat DPA |
| 0.2 | Gew.-Teile Jeffcat ZF10 |

Die Mischung A und die Isocyanat-Komponente A sowie die Addtive gemäß Tabelle 1 wurden bei einem Isocyanatindex von 100 miteinander vermischt und in eine geschlossene Form gegeben, so dass Formteile mit einer mittleren Dichte von 160 g/L erhalten wurden.

Zur Bestimmung von Formaldehyde und der Acetaldehyde wurde analog ASTM D-5116-06 vorgegangen. Die Kammergröße betrug 4,7 Litern. Als Polyurethanproben wurden Stücke mit einer Größe von 110 mm x 100 mm x 25 mm eingesetzt. Wurden Formschaumstoffe geprüft wurden Teile aus dem Innern des Schaumstoffs eingesetzt. Die Temperatur in der Meßkammer betrug während der Messung 65 °C, die relative Luftfeuchtigkeit 50 %. Die Luftaustauschrate betrug 3,0 Liter pro Stunde. Der Abluftstrom mit flüchtigen Aldehyden aus dem Polyurethan wurden über 120 Minuten durch eine Kartusche mit 2,4-Dinitrophenylhydrazin beschichtetes Silika geleitet. Die DNPH-Kartusche wurde anschließend mit einem Gemisch von Acetonitril und Wasser eluiert. Die Konzentration von Formaldehyd und Acetaldehyd im Eluat wurde mittels HPLC bestimmt. Nach diesem Aufbau liegt die Nachweisgrenze für Formaldehydemissionen bei ≤ 11 µg/m³ und bei Acetaldehyd-emissionen bei ≤ 6 µg/m³.

Tabelle 1: In der Kammer bestimmte Formaldehydwerte der erhaltenen Polyurethanschaumstoffe ohne Zugabe von Additiven (Referenz) sowie bei Zugabe der jeweiligen Additiven A1 oder A2 in den angegebenen Konzentrationen, jeweils angegeben in Gewichtsteilen bezogen auf das Gesamtgewicht der Mischung A.

**Tabelle 1**

| | Konz. in Mischung A [Gew.-%] | Formaldehyd (µg/m³) | Acetaldehyd (µg/m³) |
|---|---|---|---|
| Referenz | - | 824 | 377 |
| V1 | 0,5 % | 51 | 412 |
| V1 | 1,0% | 19 | 368 |
| V2 | 0,1% | 301 | 391 |
| V2 | 0,55 | 52 | 454 |
| V3 | 0,1 | 278 | 277 |
| A1 | 0,1 | 266 | 223 |
| A1 | 0,25 | 62 | 162 |

## Patentansprüche

1. Verfahren zur Herstellung von Polyurethanen bei dem man
(a) Polyisocyanat,
(b) polymeren Verbindungen mit gegenüber Isocyanaten reaktiven Gruppen,
(c) Katalysatoren,
(d) aus ethylenisch ungesättigten Monomeren aufgebautes Polymer P, das im Mittel mehr als 2 funktionelle Gruppen der Formel -O-NH₂ aufweist, und gegebenenfalls
(e) Treibmittel,
(f) Kettenverlängerungs- und oder Vernetzungsmittel und
(g) Hilfsmittel und/oder Zusatzstoffe
zu einer Reaktionsmischung vermischt und die Reaktionsmischung zum Polyurethan ausreagieren lässt.

2. Verfahren nach Anspruch 1, **dadurch gekennzeichnet**, das Polymer P ein Homo- oder Copolymer ist, das im Mittel mehr als 2 Wiederholungseinheiten M_{A} aufweist, die von einem monoethylenisch ungesättigten Monomer A abgeleitet sind, das eine funktionelle Gruppen der Formel -O-NH₂ trägt.

3. Verfahren nach Anspruch 1 oder 2, **dadurch gekennzeichnet, dass** das monoethylenisch ungesättigte Monomer A die Formel I aufweist: 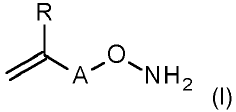 worin
R für Wasserstoff oder Methyl steht, und
A für eine Gruppe der Formel X-[O-Alk]ₙ steht, worin
X eine chemische Bindung bedeutet oder für einen bivalenten Rest steht, der an das Kohlenstoffatom, welches R trägt, gebunden ist und der ausgewählt ist unter Phenylen, Phenylen-CH₂-, C(O), CH₂, O-C₂-C₁₂-Alkandiyl und
C(O)-NR^{c}-(C₂-C₁₀-Alkandiyl), wobei R^{c} für Wasserstoff, C₁-C₄-Alkyl oder -(C₂-C₁₂-Alkandiyl)-O-NH₂ steht;
n für eine Zahl von 0 bis 20 steht, wobei n von 0 verschieden ist, wenn X für C(O) steht und
Alk für C₂-C₄-Alkandiyl steht.

4. Verfahren nach Anspruch 3, **dadurch gekennzeichnet, dass** R für Wasserstoff und A für Phenylen-CH₂ steht.

5. Verfahren nach einem der Ansprüche 1 bis 4, **dadurch gekennzeichnet, dass** das Polymer P ein Copolymer ist, das neben den Wiederholungseinheiten der Formel M_{A} ein oder mehrere weitere Wiederholungseinheiten M_{B} aufweist, die von monoethylenisch ungesättigten Monomeren B abgeleitet sind, welche keine funktionelle Gruppe der Formel - O-NR¹R² aufweisen.

6. Verfahren nach Anspruch 5, **dadurch gekennzeichnet, dass** die Monomere B Monomere B1 umfassen, die ausgewählt sind aus der Gruppe, bestehend aus monoethylenisch ungesättigten C₃-C₈-Monocarbonsäuren, monoethylenisch ungesättigten C₃-C₈-Monocarbonsäuren, monoethylenisch ungesättigten Sulfonsäuren, Amiden monoethylenisch ungesättigter C₃-C₈-Monocarbonsäuren, Hydroxy-C₂-C₄-alkylestern monoethylenisch ungesättigter C₃-C₈-Monocarbonsäuren, Poly-C₂-C₄-alkylenoxid-Estern monoethylenisch ungesättigter C₃-C₈-Monocarbonsäuren, Di-C₁-C₄-alkylamino-C₂-C₄-alkylestern monoethylenisch ungesättigter C₃-C₈-Monocarbonsäuren und N-Vinyllactamen.

7. Verfahren nach Anspruch 5 oder 6, dadurch gekennyeichnet, dass das Molverhältnis von Wiederholungseinheiten M_{A} zu Wiederholungseinheiten M_{B} im Bereich von 1 : 100 bis 10 : 1 liegt.

8. Verfahren nach Anspruch 6 oder 7, **dadurch gekennzeichnet, dass** der molare Anteil der Monomere B1, bezogen auf die Gesamtzahl der Monomere B, 10 bis 100 mol-% ist.

9. Verfahren nach einem der Ansprüche 1 bis 8, **dadurch gekennzeichnet, dass** das Polymer P in der wässrigen Zusammensetzung in gelöster Form vorliegt.

10. Verfahren nach einem der Ansprüche 1 bis 9, **dadurch gekennzeichnet, dass** die Komponente (d), bezogen auf das Gesamtgewicht der Komponenten (a) bis (f) zu 0,01 bis 2 Gew.-% enthalten ist.

11. Verfahren nach einem der Ansprüche 1 bis 10, **dadurch gekennzeichnet, dass** die polymeren Verbindungen mit gegenüber Isocyanaten reaktiven Gruppen (b) Polyetherole enthalten.

12. Verfahren nach einem der Ansprüche 1 bis 11, **dadurch gekennzeichnet, dass** die Katalysatoren (c) einbaubare Aminkatalysatoren enthalten.

13. Verfahren nach Anspruch 12, **dadurch gekennzeichnet, dass** als einbaubare Katalysatoren Verbindungen eingesetzt werden, die neben der bzw. den gegenüber Isocyanaten reaktiven Gruppen eine oder mehrere tertiäte, aliphatische Aminogruppen aufweisen.

14. Verfahren nach einem der Ansprüche 1 bis 13, **dadurch gekennzeichnet, dass** das Polyurethan ein Polyurethanschaumstoff mit einer mittleren Dichte von 20 bis 850 g/L ist.

15. Verfahren nach einem der Ansprüche 1 bis 13, **dadurch gekennzeichnet, dass** das Polyurethan ein kompaktes Polyurethan mit einer mittleren Dichte von mehr als 850 g/L ist.

16. Polyurethan, herstellbar nach einem Verfahren gemäß einem der Ansprüche 1 bis 15.

17. Verwendung von Polyurethanen nach Anspruch 16 im Innenraum von Verkehrsmitteln.

## Claims

1. A process for the production of polyurethanes where
(a) polyisocyanate,
(b) polymeric compounds having groups reactive toward isocyanates,
(c) catalysts,
(d) polymer P formed from ethylenically unsaturated monomers and having an average of more than 2 functional groups of the formula -O-NH₂, and optionally
(e) blowing agent,
(f) chain extender and/or crosslinking agent, and
(g) auxiliaries and/or additives
are mixed to give a reaction mixture, and the reaction mixture is allowed to complete a reaction to give the polyurethane.

2. The process according to claim 1, wherein the polymer P is a homo- or copolymer having an average of more than 2 repeat units M_{A} derived from a monoethylenically unsaturated monomer A bearing a functional group of the formula -O-NH₂.

3. The process according to claim 1 or 2, wherein the monoethylenically unsaturated monomer A has the formula I: 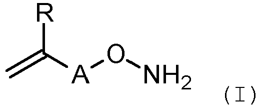 in which
R is hydrogen or methyl, and
A is a group of the formula X-[O-Alk]ₙ in which
X is a chemical bond or is a bivalent radical which is bonded to the carbon atom that bears R and is selected from phenylene, phenylene-CH₂-, C(O), CH₂, O-C₂-C₁₂-alkanediyl and C(O)-NR^{c}-(C₂-C₁₀-alkanediyl) where R^{c} is hydrogen, C₁-C₄-alkyl or -(C₂-C₁₂-alkanediyl)-O-NH₂;
n is a number from 0 to 20, where n is not 0 when X is C(O) and
Alk is C₂-C₄-alkanediyl.

4. The process according to claim 3, wherein R is hydrogen and A is phenylene-CH₂.

5. The process according to any of claims 1 to 4, wherein the polymer P is a copolymer having, aside from the repeat units of the formula M_{A}, one or more further repeat units M_{B} derived from monoethylenically unsaturated monomers B having no functional group of the formula -O-NR¹R².

6. The process according to claim 5, wherein the monomers B comprise monomers B1 selected from the group consisting of monoethylenically unsaturated C₃-C₈-monocarboxylic acids, monoethylenically unsaturated C₃-C₈-monocarboxylic acids, monoethylenically unsaturated sulfonic acids, amides of monoethylenically unsaturated C₃-C₈-monocarboxylic acids, hydroxy-C₂-C₄-alkyl esters of monoethylenically unsaturated C₃-C₈-monocarboxylic acids, poly-C₂-C₄-alkylene oxide esters of monoethylenically unsaturated C₃-C₈-monocarboxylic acids, di-C₁-C₄-alkylamino-C₂-C₄-alkyl esters of monoethylenically unsaturated C₃-C₈-monocarboxylic acids and N-vinyllactams.

7. The process according to claim 5 or 6, wherein the molar ratio of repeat units M_{A} to repeat units M_{B} is in the range from 1:100 to 10:1.

8. The process according to claim 6 or 7, wherein the molar proportion of the monomers B1, based on the total number of monomers B, is 10 to 100 mol%.

9. The process according to any of claims 1 to 8, wherein the polymer P is in dissolved form in the aqueous composition.

10. The process as claimed in any of claims 1 to 9, wherein the quantity comprised of component (d), based on the total weight of components (a) to (f), is from 0.01 to 2% by weight.

11. The process as claimed in any of claims 1 to 10, wherein the polymeric compounds (b) having groups reactive toward isocyanates comprise polyetherols.

12. The process as claimed in any of claims 1 to 11, wherein the catalysts (c) comprise incorporable amine catalysts.

13. The process as claimed in claim 12, wherein compounds used as incorporable catalysts have, alongside the group(s) reactive toward isocyanates, one or more tertiary aliphatic amino groups.

14. The process as claimed in any of claims 1 to 13, wherein the polyurethane is a polyurethane foam with an average density of from 20 to 850 g/L.

15. The process as claimed in any of claims 1 to 13, wherein the polyurethane is a compact polyurethane with an average density of more than 850 g/L.

16. A polyurethane which can be produced by a process as claimed in claims 1 to 15.

17. The use of polyurethanes as claimed in claim 16 in the interior of means of transport.

## Revendications

1. Procédé de fabrication de polyuréthanes, selon lequel
(a) un polyisocyanate,
(b) des composés polymères contenant des groupes réactifs avec les isocyanates,
(c) des catalyseurs,
(d) un polymère P formé par des monomères éthyléniquement insaturés, qui comprend en moyenne plus de 2 groupes fonctionnels de formule -O-NH₂, et éventuellement
(e) des agents gonflants,
(f) des agents d'allongement de chaînes et/ou de réticulation, et
(g) des adjuvants et/ou additifs,
sont mélangés en un mélange réactionnel et le mélange réactionnel est laissé réagir pour former le polyuréthane.

2. Procédé selon la revendication 1, **caractérisé en ce que** le polymère P est un homo- ou copolymère, qui comprend en moyenne plus de 2 unités de répétition M_{A}, qui sont dérivées d'un monomère monoéthyléniquement insaturé A, qui porte un groupe fonctionnel de formule -O-NH₂.

3. Procédé selon la revendication 1 ou 2, **caractérisé en ce que** le monomère monoéthyléniquement insaturé A présente la formule I : 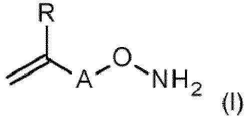 dans laquelle
R représente hydrogène ou méthyle, et
A représente un groupe de formule X-[O-Alk]ₙ, dans laquelle
X signifie une liaison chimique ou représente un radical bivalent, qui est relié à l'atome de carbone qui porte R, et qui est choisi parmi phénylène, phénylène-CH₂-, C(O), CH₂, O-alcanediyle en C₂-C₁₂ et C(O)-NR^{c}-(alcanediyle en C₂-C₁₀), R^{c} représentant hydrogène, alkyle en C₁-C₄ ou - (alcanediyle en C₂-C₁₂)-O-NH₂ ;
n représente un nombre de 0 à 20, n étant différent de 0 lorsqu'X représente C(O), et
Alk représente alcanediyle en C₂-C₄.

4. Procédé selon la revendication 3, **caractérisé en ce que** R représente hydrogène et A représente phénylène-CH₂.

5. Procédé selon l'une quelconque des revendications 1 à 4, **caractérisé en ce que** le polymère P est un copolymère qui comprend en plus des unités de répétition de formule M_{A} une ou plusieurs unités de répétition supplémentaires M_{B}, qui sont dérivées de monomères monoéthyléniquement insaturés B qui ne comprennent pas de groupe fonctionnel de formule -O-NR¹R².

6. Procédé selon la revendication 5, **caractérisé en ce que** les monomères B comprennent des monomères B1, qui sont choisis dans le groupe constitué par les acides monocarboxyliques en C₃-C₈ monoéthyléniquement insaturés, les acides monocarboxyliques en C₃-C₈ monoéthyléniquement insaturés, les acides sulfoniques monoéthyléniquement insaturés, les amides d'acides monocarboxyliques en C₃-C₈ monoéthyléniquement insaturés, les esters hydroxy-alkyliques en C₂-C₄ d'acides monocarboxyliques en C₃-C₈ monoéthyléniquement insaturés, les esters de polyoxyde d'alkylène en C₂-C₄ d'acides monocarboxyliques en C₃-C₈ monoéthyléniquement insaturés, les esters de di-alkylamino en C₁-C₄-alkyle en C₂-C₄ d'acides monocarboxyliques en C₃-C₈ monoéthyléniquement insaturés et les N-vinyllactames.

7. Procédé selon la revendication 5 ou 6, **caractérisé en ce que** le rapport molaire entre les unités de répétition M_{A} et les unités de répétition M_{B} se situe dans la plage allant de 1:100 à 10:1.

8. Procédé selon la revendication 6 ou 7, **caractérisé en ce que** la proportion molaire des monomères B1, par rapport au nombre total de monomères B, est de 10 à 100 % en moles.

9. Procédé selon l'une quelconque des revendications 1 à 8, **caractérisé en ce que** le polymère P se présente sous forme dissoute dans la composition aqueuse.

10. Procédé selon l'une quelconque des revendications 1 à 9, **caractérisé en ce que** le composant (d) est contenu à hauteur de 0,01 à 2 % en poids, par rapport au poids total des composants (a) à (f).

11. Procédé selon l'une quelconque des revendications 1 à 10, **caractérisé en ce que** les composés polymères contenant des groupes réactifs avec les isocyanates (b) contiennent des polyétherols.

12. Procédé selon l'une quelconque des revendications 1 à 11, **caractérisé en ce que** les catalyseurs (c) contiennent des catalyseurs aminés montables.

13. Procédé selon la revendication 12, **caractérisé en ce que** des composés qui comprennent en plus du ou des groupes réactifs avec les isocyanates un ou plusieurs groupes amino aliphatiques tertiaires sont utilisés en tant que catalyseurs montables.

14. Procédé selon l'une quelconque des revendications 1 à 13, **caractérisé en ce que** le polyuréthane est une mousse de polyuréthane ayant une densité moyenne de 20 à 850 g/l.

15. Procédé selon l'une quelconque des revendications 1 à 13, **caractérisé en ce que** le polyuréthane est un polyuréthane compact ayant une densité moyenne de plus de 850 g/l.

16. Polyuréthane, pouvant être fabriqué par un procédé selon l'une quelconque des revendications 1 à 15.

17. Utilisation de polyuréthanes selon la revendication 16 dans l'espace intérieur de moyens de transport.
